# FASCICULE DE BREVET EUROPEEN

(11) **EP 0 659 979 B1**
(45) Date de publication et mention de la délivrance du brevet: **25.02.1998**
(21) Numéro de dépôt: 94402962.8
(22) Date de dépôt: 21.12.1994
(51) Int. Cl.: F01D 17/16, F01D 5/14

(54) **Aube de turbomachine à cambrure variable**
Turbinenschaufel mit verstellbare Wölbung
Variable camber turbine blade

(30) Priorité: 22.12.1993 FR 9315393
(43) Date de publication de la demande: 28.06.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Loudet, Claude, F-77950 Maincy (FR); Mirete, Jean-Paul, F-77550 Moissy Cramayel (FR)

(56) Documents cités:
- EP-A- 0 223 194
- EP-A- 0 274 293
- DE-A- 2 321 582
- US-A- 3 723 021
- US-A- 4 856 962

## Description

L'invention se rapporte aux aubes à cambrure variable utilisées dans les turbomachines, en particulier les turbomoteurs pour aéronefs.

Afin d'améliorer le rendement d'une turbomachine susceptible de fonctionner à des régimes différents, il est courant de modifier l'inclinaison de certaines aubes en fonction du régime de la turbomachine.

Une aube comprend un bord d'attaque et un bord de fuite reliés par deux flancs appelés respectivement intrados et extrados. L'intrados est généralement concave et incliné vers l'amont du flux de fluide, alors que l'extrados est convexe et incliné vers l'aval de ce même flux de fluide. Le fluide exerce une pression plus importante sur l'intrados que sur l'extrados. On appelle surface moyenne la surface géométrique reliant le bord d'attaque au bord de fuite et passant à mi-distance de l'intrados et de l'extrados.

Dans une technologie plus élaborée, on peut aussi faire varier la cambrure de certaines aubes en fonction du régime de la turbomachine. Ce type d'aube comporte habituellement une partie avant et une partie arrière articulées l'une par rapport à l'autre.
Une jointure entre la partie avant et la partie arrière de l'aube assure à la fois la continuité de l'intrados et de l'extrados, ainsi que l'étanchéité entre l'intrados et l'extrados. La jointure comporte une surface concave solidaire de l'une des parties et ayant la forme d'une portion de surface de révolution centré sur l'axe géométrique de l'articulation, ainsi qu'une surface convexe solidaire de l'autre partie et arrivant à proximité de la précédente, l'une de ces deux surfaces étant susceptibles d'un déplacement circulaire par rapport à l'autre autour de l'axe de l'articulation. Cet axe est généralement dans un proche voisinage de la surface moyenne.

La proximité des surfaces concaves et convexes de la jointure assure l'étanchéité entre l'intrados et l'extrados. Lorsque l'aube est en position cambrée, la surface convexe de la jointure n'est plus recouverte par la surface concave, et elle participe ainsi à la continuité de l'extrados.

On connaît des aubes à cambrure variable comportant un bord d'attaque fixe et un bord de fuite mobile. Le brevet EP-A-274 293 en donne un exemple relatif à une aube directrice d'entrée d'air, dans laquelle le bord d'attaque constitue aussi un bras rayonnant assurant la liaison entre le carter d'entrée d'air d'un turbomoteur pour aéronef et son moyeu.

On connaît aussi des aubes à cambrure variable dont le bord d'attaque est pivotant et le bord de fuite fixe, par exemple celle qui est décrite dans le brevet FR-A-2 325 831.

On connaît aussi des aubes à cambrure variable dont le bord d'attaque et le bord de fuite sont pivotants, comme dans le brevet US-A-4 995 786.

Dans ces trois types d'aubes, l'amélioration de rendement obtenu en ajustant au mieux la cambrure de l'aube est altérée par les perturbations qui apparaissent dans l'écoulement du fluide le long des faces latérales de l'aube et à la hauteur de l'articulation. Ces perturbations proviennent à la fois de l'espace laissé au niveau de l'articulation entre le bord d'attaque et le bord de fuite, ainsi que de la discontinuité de l'extrados de l'aube au niveau de l'articulation, c'est à dire du changement brutal de la direction de la tangente à ces surfaces dans le sens de l'écoulement du fluide.

Ce changement brutal de direction est particulièrement gênant sur l'extrados, car il produit au niveau de l'articulation une survitesse très localisée ainsi que des décollement aléatoires de la veine de fluide qui sont à l'origine de contraintes mécaniques anormales sur les aubes, ainsi que de pertes de rendement au niveau de la turbomachine.

Le brevet DE-A-42 12880 propose une aube articulée dans laquelle l'épaisseur de la partie avant est fortement augmentée par rapport à celle de la partie arrière, la partie avant entourant de ce fait beaucoup plus l'articulation. Cette solution améliore la continuité de l'extrados lorsque l'aube est cambrée au maximum. Elle dégrade par contre les performances de l'aube dans toutes les autre configurations. Ceci provient de la surépaisseur de la partie avant de l'aube ainsi que de la rupture simultanée de continuité de l'intrados et de l'extrados au niveau de l'articulation.
Cette solution apporte une étanchéité parfaite entre l'intrados et l'extrados, ainsi qu'une bonne continuité de l'écoulement le long de l'intrados.
Elle aggrave par contre la rupture de continuité de l'extrados.

Plus généralement, l'amélioration du rendement de la turbomachine rendue possible sur des plages de fonctionnement plus étendues grâce à la possibilité de faire varier la cambrure de certaines aubes est en partie perdue à cause de la dégradation des performances aérodynamiques de l'aube en position cambrée.

Dans le but de réduire la dégradation des performances de l'aube en position cambrée tout en restant au plus près du profil idéal de l'aube en position de cambrure minimale, l'invention propose de déporter l'axe géométrique de pivotement de l'aube dans la direction de l'intrados, par rapport à la surface moyenne dans le voisinage de laquelle cet axe se trouve habituellement. Ceci revient à augmenter globalement le rayon de courbure des surfaces concaves et convexes assurant la jonction, ainsi qu'à incliner ces surfaces par rapport à la surface moyenne. Les surfaces de la jonction s'écarteront ainsi rapidement de l'intrados et tangenteront progressivement l'extrados avec un rayon de courbure plus important.

Le déportement devrait être au moins égal au 1/4 de l'épaisseur de l'aube pour que le résultat recherché devienne appréciable, mais on préférera un départ plus important qui sera supérieur ou égal au 1/3 de l'épaisseur de l'aube pour un résultat meilleur.

Les surfaces concaves et convexes de la jonction ne venant plus tangenter l'intrados, un espace se forme sur l'intrados au niveau de l'articulation lorsque l'aube est en position cambrée. Afin de ne pas dégrader l'écoulement du fluide le long de l'intrados, il est préférable de masquer cet espace par un opercule qui assure ainsi la continuité de l'intrados. Dans un mode de réalisation préféré de l'invention, cet opercule sera solidaire par une extrémité de la partie de l'aube dont la surface de la jonction est concave, alors que son autre extrémité reste libre. En pratique, c'est la partie avant de l'aube qui comporte la surface de jonction concave, et en conséquence qui supportera l'opercule. La surface extérieur de l'opercule est dans le prolongement de l'intrados.

Dans un mode de réalisation préféré, le rayon de courbure de la surface convexe de la jonction est voisin de celui de la surface concave à proximité de l'intrados, afin d'assurer l'étanchéité entre l'intrados et l'extrados. Cette surface convexe se raccorde sur l'extrados de la partie arrière de l'aube avec un rayon de courbure qui tend progressivement vers le rayon de courbure de cet extrados, afin d'assurer la continuité de l'extrados lorsque l'aube est en position cambrée.

L'invention permet une amélioration sensible des performances de l'aube en position fortement cambrée, sans qu'il y ait une dégradation particulière de ces performances en position de cambrure minimale.
L'application de l'invention permet d'augmenter d'environ 10° la cambrure maximale de l'aube sans augmenter la dégradation de ses performances, ce qui permet d'étendre le domaine d'utilisation performante de la turbomachine.

Une aube conforme à l'invention est utilisable partout où l'on peut déja utiliser une aube articulée classique.

L'invention et les avantages qu'elle procure seront mieux compris au vu de la description d'un exemple de réalisation donné à titre non limitatif, ainsi que des figures annexées.

La figure 1 représente une coupe de l'aube, avec un déport de l'axe de pivotement supérieur à 1/2.

La figure 2 est une coupe grossie de l'articulation de l'aube.

La figure 3 est un diagramme des vitesses d'écoulement du fluide le long de l'intrados et de l'extrados d'une aube articulée à cambrure variable classique, à la surface de la couche limite. Ce diagramme a été établi par la méthode numérique dite de Navier Stokes bien connue de l'homme de métier.

la figure 4 est ce même diagramme dans le cas d'une aube conforme à l'invention.

La figure 5 est un diagramme des vitesses d'écoulement du fluide dans une veine de fluide comportant des aubes articulées à cambrure variable classiques. Les vitesses sont visualisées par des courbes isomach isentropiques établies également par la méthode Navier-Stokes.

La figure 6 est ce même diagramme dans le cas d'une aube conforme à l'invention.

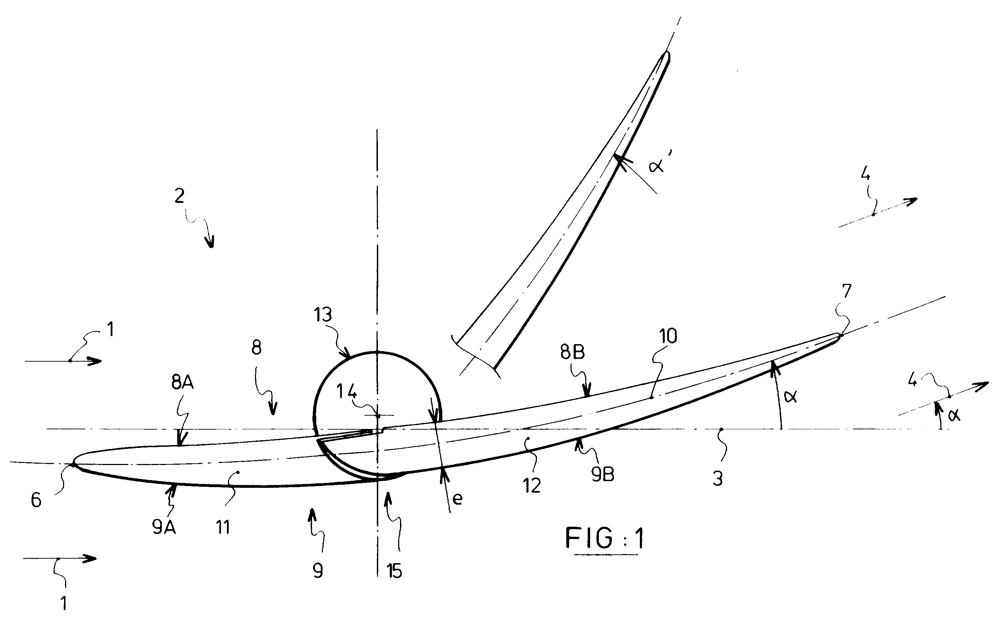

On se reportera en premier lieu à la figure 1.
Le fluide en mouvement représenté par les flèches 1 arrive sur l'avant de l'aube 2 parallèlement à l'axe géométrique 3 et subit une déviation du fait de l'inclinaison de l'angle α de l'aube par rapport à cet axe. La direction du fluide en mouvement à l'arrière de l'aube 2 après déviation par cette aube, est représentée par les flèches 4 qui fond un angle α par rapport à l'axe 3.
Communément, l'extrémité 6 à l'avant de l'aube est appelé bord d'attaque, l'extrémité 7 à l'arrière de l'aube est appelée bord de fuite, et la surface latérale reliant le bord d'attaque 6 au bord de fuite 7 du côté de la déviation d'angle α du fluide est appelée intrados 8, alors que cette même surface située du côté opposé est appelée extrados 9. En allant du bord d'attaque 6 au bord de fuite 7, la distance entre l'intrados 8 et l'extrados 9 est d'abord en augmentation, passe par un maximum e appelé communément épaisseur de l'aube et décroît ensuite jusqu'au bord de fuite 7. L'aube idéale est infiniment mince et réduite à une surface moyenne 10 allant du bord d'attaque 6 au bord de fuite 7 et qui se confond avec l'intrados 8 et l'extrados 9. L'aube réelle 2 est épaisse afin d'atteindre la résistance mécanique voulue, et la surface moyenne 10 est équidistante de l'intrados 8 et de l'extrados 9.

Dans cet exemple, la partie avant 11 de l'aube 2 est fixe alors que sa partie arrière 12 est solidaire d'une plate-forme pivotante 13 qui pivote autour d'un axe 14, cet axe 14 constituant par conséquent un axe géométrique de pivotement pour la partie arrière 12.

En pivotant autour de l'axe 14, l'inclinaison de la partie arrière 12 peut ainsi varier entre un minimum α et un maximum α'.

L'intrados 8 se divise en 8A sur la partie avant 11 et en 8B sur la partie arrière, alors que l'extrados 9 se divise en 9A sur la partie avant 11 et en 9B sur la partie arrière 12.

Habituellement, l'intrados 8 est en surpression et l'extrados 9 en dépression. Afin d'éviter les fuites de fluide de l'intrados 8 vers l'extrados 9 entre la partie avant 11 et la partie arrière 12, l'aube 2 comporte à la jonction 15 de sa partie avant 11 et de sa partie arrière 12 un dispositif d'étanchéité.

Cette jonction 15 assure aussi dans certaines limites la continuité des profils de l'intrados et de l'extrados.

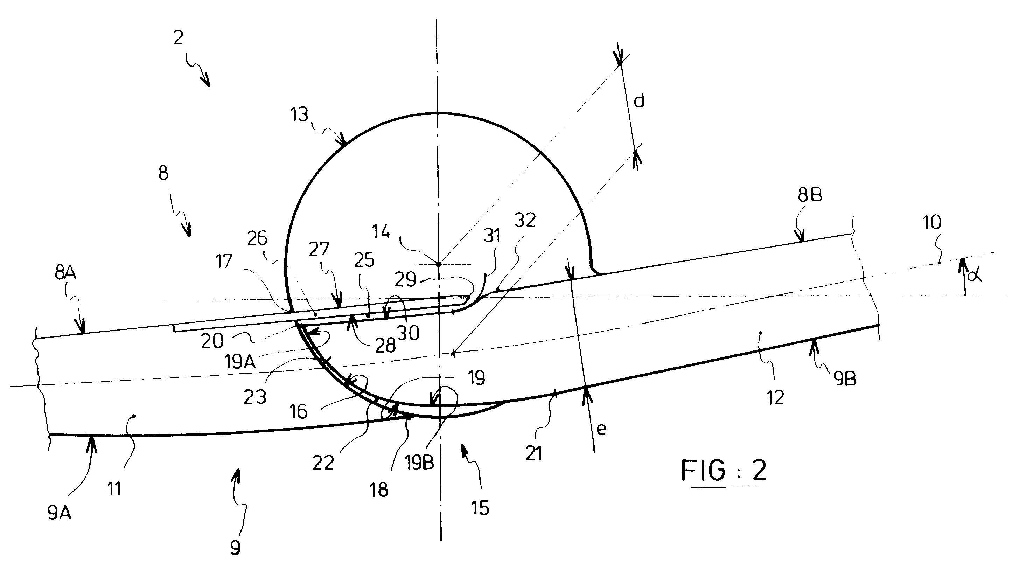

On se reportera maintenant à la figure 2. Selon l'invention, l'axe de pivotement 14 n'est pas sur la surface moyenne 12 comme habituellement mais déporté par rapport à elle d'une distance d dans la direction de l'intrados 8. La jonction 15 entre la partie avant 11 et la partie arrière 12 est constitué de la façon suivante :

La partie avant 11 se termine en regard de la partie arrière 12 par une surface concave 16 qui à la forme d'une portion de surface de révolution centrée sur l'axe 14, cette surface 16 se raccordant avec l'intrados 8A le long d'une ligne 17 et avec l'extrados 9A le long d'une ligne 18. La partie arrière 12 se termine en regard de la partie avant 11 par une surface convexe 19 de forme complémentaire à la surface 16, cette surface 19 se raccordant avec l'intrados 8B le long d'une ligne 20 et avec l'extrados 9B le long d'une ligne 21. Lorsque la partie arrière 12 pivote autour de l'axe géométrique 14, la surface convexe 19 se déplace à l'intérieur de la surface concave 16, et un jeu 22 est laissé entre ces surfaces 16 et 19. La surface 19 se compose d'une première surface connexe 19A qui s'étend depuis la ligne 20 jusqu'à une ligne 23 rapprochée de la ligne 20 et approximativement parallèle à elle. Cette surface 19B a la forme d'une portion de surface de révolution d'axe 14. Le jeu 22 laissé entre la surface 19A et la surface 16 est réduit pour assurer l'étanchéité entre l'intrados 8 et l'extrados 9. La surface 19 se compose aussi d'une surface 19B qui s'étend depuis la ligne 23 jusqu'à la ligne 21, et dont le rayon de courbure croit de façon régulière depuis la ligne 23 où il a la valeur du rayon de courbure de la surface 19A, jusqu'à la ligne 21 où il a la valeur du rayon de courbure de l'extrados 9B.

Lorsque l'aube 2 est à sa cambrure minimale, c'est à dire que l'angle d'inclinaison α est minimal, une partie de la surface 19B émerge de la surface 16 et assure la continuité de l'extrados 9 au niveau de la jonction 15, plus précisément entre les lignes 18 et 21 délimitant respectivement les surfaces 9A et 9B.

Lorsque la cambrure de l'aube 2 augmente, la partie émergée de la surface 19B augmente elle aussi et permet ainsi le raccordement entre les surfaces 9A et 9B qui sont encore plus inclinées l'une par rapport à l'autre. On peut augmenter encore la cambrure de l'aube avec une bonne étanchéité jusqu'à ce que la ligne 23 arrive en regard de la ligne 18. Une augmentation encore plus importante de la cambrure de l'aube reste possible, mais avec une dégradation de l'étanchéité entre l'intrados 8 et l'extrados 9.

Lorsque l'aube 2 est cambrée, un espace 25 apparait dans l'intrados 8 au niveau de la jointure 15. Cet espace est susceptible de nuire à la régularité de l'écoulement du fluide le long de l'intrados 8. Pour remédier à cela, l'invention propose de masquer cet espace 25 par un opercule 26. Cet opercule 26 a une forme mince et aplatie. Il comporte une surface extérieure 27 qui est dans le prolongement des surfaces 8A et 8B, ainsi qu'une surface intérieure 28 de préférence plane et opposée à la surface 27. L'opercule 26 est solidaire par une extrémité à la partie avant 11 dont il prolonge l'intrados 8A, alors que son extrémité opposée 29 est libre.

Afin de loger l'opercule 26 dans le volume de l'aube 2, la partie arrière 12 comporte sur son intrados 8B et à partir de la ligne 20 une dépression dont la profondeur est au moins égale à l'épaisseur de l'opercule 26 et qui est délimitée intérieurement par une surface 30 en regard de la surface 28 de l'opercule 26 et de forme complémentaire à ladite surface 28.

L'opercule 26 tangente par son extrémité libre 29 une portion de surface de révolution fictive 31 d'axe 14 et tangente à la surface 30. Cette surface 30 contourne l'extrémité libre 29 de l'opercule 26 pour se raccorder suivant une ligne 32 à l'intrados 8B. A noter qu'en l'absence d'opercule 26, la dépression permettant de loger cet opercule 26 n'a plus lieu d'être et la surface 29 délimitant cette dépression se confond alors avec l'intrados 8B.

On remarquera que l'opercule 26 est solidaire de la partie avant 11 qui comporte aussi la surface concave 16 de la jonction 15. Cette disposition est préférable dans le cas où le fluide comporte des particules en suspension, car elle empêche ces particules de pénétrer par inertie dans l'espace 25 et le jeu 22. Avec une disposition inversée au contraire, c'est à dire avec un opercule 26 et une surface concave 16 rattachée à la partie arrière 12, ces même particules pénétreraient par inertie dans l'espace 25 et le jeu 22, au risque de les colmater et de bloquer l'aube.

Les avantages de l'invention apparaîtront maintenant clairement :

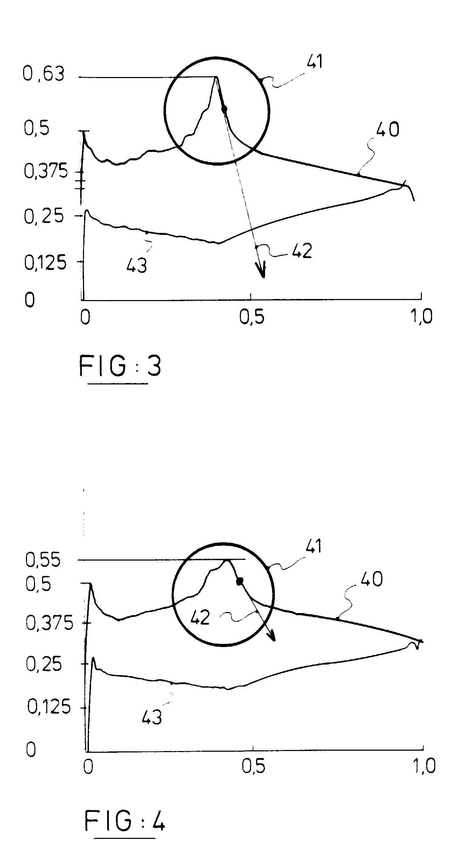

Lorsque l'aube 2 est en cambrure minimale, c'est à dire que l'inclinaison α de la partie arrière 12 est minimale, les surfaces 8A, 27 et 8B constituant l'intrados 8 ainsi que les surfaces 9A, 19B partielle et 9B constituant l'extrados 9 se confondent avec les surfaces optimales qu'aurait l'aube 2 si elle n'était pas articulée, les extrémités des vides 22 et 25 n'ayant qu'une influence négligeable sur l'écoulement du fluide.
Lorsque l'aube 2 est au contraire en cambrure maximale, c'est à dire que l'inclinaison α de la partie arrière 12 est maximale, la ligne 23 est très proche de la ligne 18, et l'extrados 9 constitué par les surfaces 9A, 19B complète et 9B ont un grand rayon de courbure qui évolue d'une façon continue et sans rupture de l'avant vers l'arrière de l'aube 2, ce qui autorise un très bon écoulement du fluide. Du côté de l'intrados 8, l'espace 25 est important, mais il est masqué par l'opercule 26 et est donc sans effet sur l'écoulement du fluide.
On se reportera maintenant à la figure 3. Elle concerne une aube classique cambrée à 30° dont le déport d est nul, c'est à dire dont l'axe géométrique de pivotement 14 est sur la surface moyenne 10. L'abscisse représente en coordonnée relative la position sur l'aube entre le bord d'attaque 6 et le bord de fuite 7. L'ordonnée représente la vitesse d'écoulement de l'air en mach, c'est à dire en vitesse relative par rapport à la vitesse du son. La courbe supérieure 40 traduit la vitesse d'écoulement de l'air le long de l'extrados 9. En parcourant l'abscisse de la valeur 0 à la valeur 1, ce qui traduit le parcours le long de l'aube entre le bord d'attaque 6 et le bord de fuite 7, la vitesse qui est initialement de 0,5 mach environ, passe par un minimum au niveau de l'extrados 9A, présente ensuite une zone de survitesse entourée par le cercle 41 correspondant au passage de l'air sur la jointure 15, puis décroît régulièrement le long de l'extrados 9B jusqu'à atteindre une valeur de 0,325 mach environ au bord de fuite. Dans le cercle 41, qui entoure la zone critique, la survitesse atteint 0,63 mach et décroît ensuite brutalement avec un gradient 42 négatif d'environ -4,1. Cette survitesse et ce gradient négatif se produisent au niveau de l'articulation où la courbure convexe de l'extrados est importante, ce qui perturbe l'écoulement de l'air et provoque des décollements.

on se reportera maintenant à la figure 4. La ligne 40 exprimant la vitesse d'écoulement de l'air le long de l'extrados 9 est très semblable à celle de la figure 3 sauf dans la zone de survitesse entourée par le cercle 41 où le maximum n'est plus que de 0,55 mach au lieu de 0,63 mach et le gradient négatif de -1,3 au lieu de -4,1, ce qui régularise l'écoulement de l'air.

On remarquera que la courbe inférieure 43 qui exprime la vitesse d'écoulement de l'air le long de l'intrados 8 sont pratiquement identiques sur la figure 3 et la figure 4, ce qui montre que l'amélioration sensible de l'écoulement de l'air le long de l'extrados 9 par augmentation du rayon de courbure au niveau de l'articulation n'entraîne pas de dégradation corrélative sur l'intrados 8.

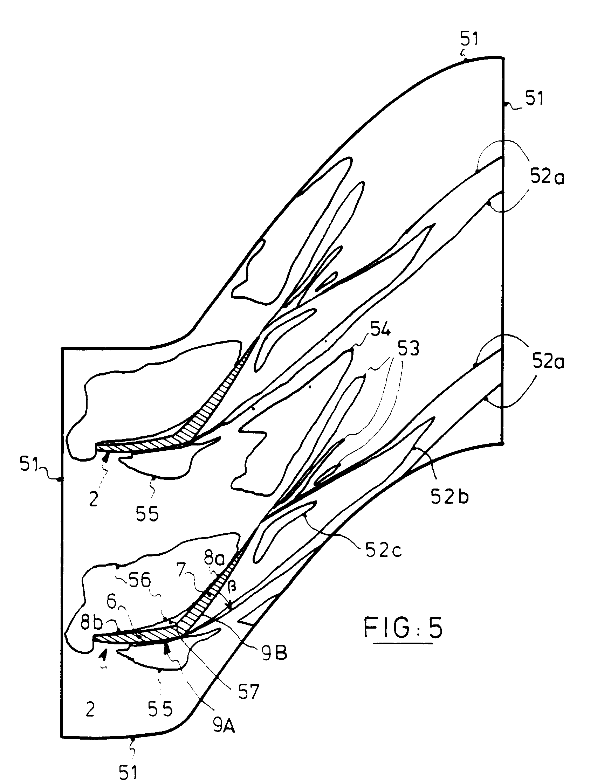

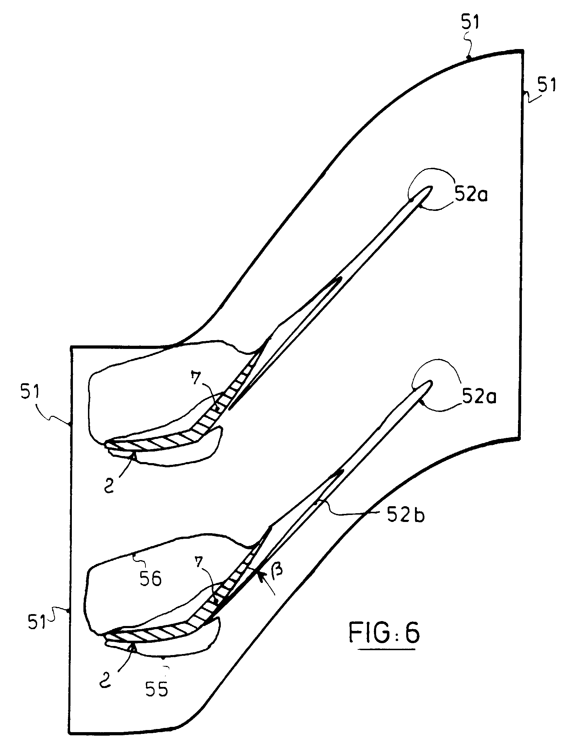

L'avantage de l'invention apparaîtra de façon encore plus évidente en comparant les figures 5 et 6 qui visualisent l'écoulement du fluide dans la veine du fluide avec respectivement des aubes à cambrure variable classiques et des aubes à cambrure variable selon l'invention.

On se repportera en premier lieu à la figure 5. L'écoulement est visualisé autour de deux aubes 2 dans un champ délimité par le périmètre 51. L'aube 2 est classique et le bord de fuite 7, articulé sans déport sur le bord d'attaque 6, est incliné à 40°, son épaisseur e est de 11mm et le rayon de la surface 16 non représentée ici est de 5,5 mm.

L'isomach 52a délimite une zone à vitesse d'écoulement du fluide ralentie, cette zone partant de l'extrados 9B du bord de fuite 7 et s'étendant loin en arrière de l'aube, le ralentissement étant encore plus important à l'intérieur des isomach 52b et surtout 52c. L'écoulement du fluide ne peut plus se faire que dans la section restante de la veine de fluide, c'est à dire à l'extérieur de la courbe isomach 52a. Le flux de fluide en mouvement décolle donc de l'aube suivant un angle β formé par l'extrados 9B du bord de fuite 7 et l'isomach 52a arrivant sur ledit extrados 9B.

Les isomach 53 en aval des bords de fuite 7 et les isomach 54, à mi-distance des bords de fuites 7 de deux aubes 2 consécutives et en aval desdits bords de fuite, délimitent des zones d'écoulement perturbés.

Ainsi, la presque totalité de la veine est obstruée par les zones délimitées par les isomach 52a, 53 et 54. L'aube articulée classique n'est en conséquence guère utilisable avec une telle cambrure.

L'isomach 55 visualise une zone de survitesse sur l'extrados 9A du bord de fuite 6. L'isomach 56 délimite une zone de vitesses intermédiaires, et la zone 57 comprise entre l'isomach 56 et l'intrados 8A, 8B du bord d'attaque 6 et du bord de fuite 7 est une zone de sous-vitesse traduisant le décollement du flux de fluide à cet endroit.

On se repportera maintenant à la figure 6 donnant ce même diagramme pour une aube conforme à l'invention, avec la même inclinaison du bord de fuite 7 et un déport d de l'axe d'articulation non référencé sur cette figure égal à 54 % de l'épaisseur e de l'aube 2, le rayon de la surface concave 16 non référencée ici étant de 11,5mm.

Un premier résultat important obtenu est que l'isomach 52a délimite maintenant une zone très réduite et étroite beaucoup mieux alignée sur le bord de fuite 7, l'angle de décollement β étant ramené à quelques degrés, alors que les isomach référencées 53 et 54 sur la figure 5 ont disparu. La section de la veine de fluide extérieure à ses isomach, dans laquelle l'écoulement du fluide se fait normalement, correspond maintenant à la presque totalité de cette veine. Les isomach 55 et 56 n'ont pas varié de façon significative compte-tenu de la précision du modèle Navier Stock, ce qui montre que l'amélioration des performances ci-dessus n'a pas entraîné de dégradations significatives ailleurs.

En conclusion, la comparaison des figures 5 et 6 met en évidence deux avantages de l'invention :
1) écoulement du fluide nettement amélioré,
2) augmentation du domaine d'utilisation de l'aube qui autorise un excellent écoulement du fluide même aux fortes cambrures.

On remarquera que ces courbes n'ont de signification que comparées entre elles, puisqu'en valeur absolue, elle dépendent complètement de la géométrie des aubes et des conditions de fonctionnement de la turbomachine.

L'exemple de réalisation qui vient d'être décrit est donné à titre non exclusif et non limitatif, l'invention autorisant des conceptions variées de l'aube qui n'en altèrent pas son contenu :

L'aube 2 à un profil optimal lorsque l'intrados 8B et l'extrados 9B de la partie arrière 12 sont dans le prolongement respectivement de l'intrados 8A et de l'extrados 9A de la partie avant 11. Ce profil optimal peut être donné à l'aube 2 en position de cambrure minimale, en position de cambrure intermédiaire, à la rigueur en position de cambrure maximale selon le besoin. La position de la surface 30 en regard de l'opercule 26, ainsi que le jeu 22 et la ligne 18 étant déterminés pour accepter cette cambrure minimale, c'est à dire pour qu'il n'y ait pas d'interférence entre la partie arrière 12, la partie avant 11 et l'opercule 26. L'aube peut avoir un seul pivot d'axe 14 ou deux pivots de part et d'autre de la pale comme dans le brevet EP-A- 274 293 déja cité.

C'est en général la partie avant 11 qui est fixe et la partie arrière 12 qui est mobile, mais il est aussi possible selon les besoins d'avoir une partie avant 11 mobile et une partie arrière 12 fixe, ou bien les deux parties 11 et 12 mobiles toutes deux. La partie fixe peut être utilisée pour la structure de la turbomachine, comme dans le brevet EP-A-274 293 cité.

## Revendications

1. Aube de turbomachine à cambrure variable, ladite aube (2) d'épaisseur e comportant un intrados (8) et un extrados (9) de part et d'autre et à égale distance d'une surface moyenne (10), ladite aube (2) comportant aussi une partie avant (11) et une partie arrière (12) articulées l'une par rapport à l'autre autour d'un axe géométrique de pivotement (14), ladite aube (2) comportant aussi une jonction (15) entre la partie avant (11) et la partie arrière (12), ladite jonction (15) étant constituée par la proximité des surfaces (16) et (19) constituant respectivement les extrémités en regard l'une de l'autre de la partie avant (11) et de la partie arrière (12), la surface (16) à l'extrémité de la partie avant (11) étant concave et ayant la forme d'une portion de surface de révolution centrée sur l'axe géométrique de pivotement (14), la surface (19) à l'extrémité de la partie arrière (12) étant elle-même convexe, caractérisée en ce que l'axe géométrique de pivotement (14) est déporté dans la direction de l'intrados (8), par rapport à la surface moyenne (10) d'une distance (d) supérieure ou égale au quart de l'épaisseur (e).

2. Aube de turbomachine conforme à la revendication 1 caractérisée en ce que l'axe géométrique de pivotement (14) est déporté dans la direction de l'intrados (8), par rapport à la surface moyenne (10) d'une distance (d) supérieure ou égale au tiers de l'épaisseur (e).

3. Aube de turbomachine à cambrure variable conforme à la revendication 1 ou 2, caractérisée en ce que
l'espace (25), qui se forme sur l'intrados (8) lorsque l'aube (2) est en position cambrée, est masqué par un opercule (26).

4. Aube de turbomachine à cambrure variable conforme à la revendication 3, caractérisée en ce que
l'opercule (26) est solidaire par une extrémité de la partie avant (11) alors que son autre extrémité (29) est libre.

5. Aube de turbomachine à cambrure variable conforme à la revendication 3 ou 4, caractérisée en ce que
l'opercule (26) a une surface extérieure (27) dans le prolongement de la surface (8A) constituant l'intrados (8) de la partie avant (11).

6. Aube de turbomachine conforme à l'une quelconque des revendications 1 à 5, caractérisée en ce que la surface (19) à l'extrémité de la partie arrière (12) se raccorde sur la surface (9B) formant l'extrados (9) de la partie arrière (12) avec un rayon de courbure qui tend progressivement vers le rayon de courbure de ladite surface (9B).

## Patentansprüche

1. Turbomaschinenschaufel mit verstellbarer Wölbung, wobei die Schaufel (2) mit der Dicke e auf ihren beiden Seiten eine Wölbungsinnenseite (Intrados) (8) bzw. eine Wölbungsaußenseite (Extrados) (9) besitzt, die gleichen Abstand von einer Mittelfläche (10) haben, wobei die Schaufel (2) ferner einen vorderen Teil (11) und einen hinteren Teil (12) aufweist, die um eine geometrische Schwenkachse (14) gelenkig miteinander verbunden sind, und wobei die Schaufel (2) zwischen dem vorderen Teil (11) und dem hinteren Teil (12) eine Verbindung (15) aufweist, die durch die Nähe derjenigen Flächen (16 und 19) gebildet wird, die die einander gegenüberliegenden Endbereiche des vorderen Teils (11) bzw. des hinteren Teils (12) bilden, wobei die Fläche (16) im Endbereich des vorderen Teils (11) konkav ist und die Form eines auf der geometrischen Schwenkachse (14) zentrierten Rotationsflächenteils hat und die Fläche (19) im Endbereich des hinteren Teils (12) konvex ist,
**dadurch gekennzeichnet,**
daß die geometrische Schwenkachse (14) relativ zu der genannten Mittelfläche (10) um einen Abstand (d) zur Wölbungsinnenseite (8) hin versetzt ist, der größer oder gleich einem Viertel der Dicke (e) ist.

2. Turbomaschinenschaufel nach Anspruch 1,
dadurch gekennzeichnet,
daß die geometrische Schwenkachse (14) relativ zu der Mittelfläche (10) um einen Abstand (d) zur Wölbungsinnenseite (8) hin versetzt ist, der größer oder gleich einem Drittel der Dicke (e) ist.

3. Turbomaschinenschaufel mit verstellbarer Wölbung nach Anspruch 1 oder 2,
dadurch gekennzeichnet,
daß der Zwischenraum (25), der sich auf der Wölbungsinnenseite (9) bildet, wenn die Schaufel (2) sich in gewölbter Position befindet, von einem Deckelteil (26) abgedeckt ist.

4. Turbomaschinenschaufel mit verstellbarer Wölbung nach Anspruch 3,
dadurch gekennzeichnet,
daß das Deckelteil (26) mit einem Ende mit dem vorderen Teil (11) fest verbunden ist, während sein anderes Ende (29) frei ist

5. Turbomaschinenschaufel mit verstellbarer Wölbung nach Anspruch 3 oder 4,
dadurch gekennzeichnet,
daß das Deckelteil (26) eine Außenfläche (27) aufweist, die in der Verlängerung der die Wölbungsinnenseite (8) des vorderen Teils (11) bildenden Fläche (8A) liegt.

6. Turbomaschinenschaufel mit verstellbarer Wölbung nach einem der Ansprüche 1 bis 5,
dadurch gekennzeichnet,
daß die Fläche (19) am Ende des hinteren Teils (12) mit einem Krümmungsradius in die die Wölbungsaußenseite (8) des hinteren Teils (12) bildenden Fläche (9B) übergeht, der sich dem Krümmungsradius dieser Fläche (9B) progressiv annähert.

## Claims

1. Variable-camber turbomachine blade, the said blade (2), of thickness e, having a pressure face (8) and a suction face (9) on each side of and at an equal distance from a mean surface (10), the said blade (2) also having a front part (11) and a rear part (12) which are pivoted one with respect to the other about a geometrical pivot axis (14), the said blade (2) also having a junction (15) between the front part (11) and the rear part (12), the said junction (15) consisting of the proximity of the surfaces (16) and (19) constituting respectively those ends of the front part (11) and of the rear part (12) which face each other, the surface (16) at the end of the front part (11) being concave and having the shape of a portion of a surface of revolution centred on the geometrical pivot axis (14), the surface (19) at the end of the rear part (12) itself being convex, characterized in that the geometrical pivot axis (14) is shifted towards the pressure face (8) with respect to the mean surface (10) by a distance (d) which is greater than or equal to one quarter of the thickness (e).

2. Turbomachine blade according to Claim 1, characterized in that the geometrical pivot axis (14) is shifted in the direction of the suction face (8) with respect to the mean surface (10) by a distance (d) which is greater than or equal to one third of the thickness (e).

3. Variable-camber turbomachine blade according to Claim 1 or 2, characterized in that the space (25) which is formed on the pressure face (8) when the blade (2) is in a cambered position is masked by a cover (26).

4. Variable-camber turbomachine blade according to Claim 3, characterized in that the cover (26) is fastened by one end to the front part (11), while its other end (29) is free.

5. Variable-camber turbomachine blade according to Claim 3 or 4, characterized in that the cover (26) has an external surface (27) in the extension of the surface (8A) constituting the pressure face (8) of the front part (11).

6. Turbomachine blade according to any one of Claims 1 to 5, characterized in that the surface (19) at the end of the rear part (12) joins onto the surface (9B) forming the pressure face (9) of the rear part (12) with a radius of curvature which tends progressively towards the radius of curvature of the said surface (9B).
